**Europäisches Patentamt**

**European Patent Office**

**Office européen des brevets**

(19)

(11) Veröffentlichungsnummer: **0 184 001**
**B1**

(12)

# EUROPÄISCHE PATENTSCHRIFT

(45) Veröffentlichungstag der Patentschrift:
07.10.87

(51) Int. Cl.⁴: **C 09 J 7/04**

(21) Anmeldenummer: 85114031.9

(22) Anmeldetag: 05.11.85

(54) **Klebeband.**

(30) Priorität: 23.11.84 DE 3442695

(43) Veröffentlichungstag der Anmeldung:
11.06.86 Patentblatt 86/24

(45) Bekanntmachung des Hinweises auf die Patenterteilung:
07.10.87 Patentblatt 87/41

(84) Benannte Vertragsstaaten:
AT BE CH DE FR GB IT LI NL SE

(56) Entgegenhaltungen:
US - A - 2 751 276
US - A - 3 104 985

(73) Patentinhaber: **Beiersdorf Aktiengesellschaft,
Unnastrasse 48, D-2000 Hamburg 20 (DE)**

(72) Erfinder: **Borkowski, Norbert, Dr., Alter Söhn 44,
D-2105 Seevetal (DE)**
Erfinder: **Eggerstedt, Friedrich, Hindenburgdamm 72,
D-2080 Pinneberg (DE)**
Erfinder: **Gafron, Gisbert, Fuchsversteck 19,
D-2000 Hamburg 61 (DE)**
Erfinder: **Schulz, Burkhard, Stettiner Strasse 3,
D-2350 Neumünster (DE)**
Erfinder: **Meyer, Claus, Flutende 17,
D-2100 Hamburg 90 (DE)**

## Beschreibung

Die Erfindung betrifft ein farbiges, antistatisches Klebeband.

Antistatische Klebebänder sind bekannt. Vor allem handelt es sich dabei um schwarze Klebebänder, deren Oberfläche mit Russpartikeln beschichtet ist. So beschreibt die US-PS 3 104 985 ein flexibles Klebeband mit elektrischer Leitfähigkeit, enthaltend Russ in einem Bindemittel auf der Oberfläche. Ein weiteres elektrisch leitfähiges Klebeband dieser Art beschreibt die US-A-3 832 598, ebenfalls Russ enthaltend. Die erwünschte Eigenschaft, elektrostatische Aufladungen abzuleiten, erhalten diese Bänder durch den auf der Oberfläche befindlichen Russ, der damit aber auch zugleich die schwarze Farbe bedingt.

Zwar sind auch farbige Klebebänder bekannt, die oberflächlich mit einer Farbe bedruckt sind z.B. aus der US-A-2 751 276. Die Anforderungen an ein antistatisches Klebeband vermögen diese Bänder jedoch nicht zu erfüllen, da deren Oberflächenwiderstand als Mass für das Vermögen, elektrostatische Ladungen abzuleiten, nicht in dem Bereich eines antistatischen Klebebandes liegt.

Es besteht jedoch ein erhebliches Bedürfnis nach farbigen antistatischen Klebebänder, so aus Gründen der Ästhetik, zu Werbezwecken oder dergleichen. Zudem besteht bei der Handhabung von Sprengstoff und dergleichen ein besonderes Problem, indem von Land zu Land verschiedene Farben für verschiedene Sprengstoff-Eigenschaften stehen, so etwa schwarz für panzerbrechend bei der deutschen Bundeswehr. Demgemäss besteht ein Bedürfnis dahingehend, besondere Klassen von Sprengstoff mittels besonderer farbiger antistatischer Klebebänder zu versehen, nicht jedoch ein einheitlich schwarzes antistatisches Klebeband verwenden zu müssen.

Aufgabe der Erfindung war es, hier Abhilfe zu schaffen und ein farbiges, antistatisches Klebeband bereitzustellen, das je nach Wunsch eingefärbt werden kann, das andererseits jedoch einen für ein antistatisches Klebeband ausreichenden Oberflächenwiderstand hat.

Demgemäss betrifft die Erfindung ein farbiges antistatisches Klebeband, gekennzeichnet durch
a) einen Gewebeträger,
b) der beschichtet ist mit Russ in einem Binder,
c) wobei die Beschichtung die Struktur des Gewebes annimmt,
d) und bedruckt mit einer nicht-leitenden thixotropen Farbe,
e) wobei sich die Farbe in den Vertiefungen des Gewebeträgers befindet, sowie
f) einen Kleber auf der Rückseite.

Erfindungsgemäss wird damit ein antistatisches Klebeband geschaffen, das je nach Wunsch eingefärbt werden kann, ohne aber seine hervorragenden antistatischen Eigenschaften zu verlieren. Dabei stören die aus der Farbschicht herausragenden Hügelkuppen aus Binder/Russ nicht, der Farbeindruck wird dadurch nur unwesentlich beeinflusst. Auch der spezifische Widerstand eines erfindungsgemässen antistatischen Klebebandes liegt in dem Bereich von etwa $10^5$ bis $10^7$ ohm/cm, der für antistatische Klebebänder erforderlich ist, was einen glücklichen Griff im Hinblick auf die Empfindlichkeit des Oberflächenwiderstandes von der Russkonzentration darstellt.

Vorteilhaft beträgt die Russkonzentration im Binder etwa 10 bis 30 Gew.-%. Insbesondere handelt es sich bei dem Russ um einen feinteiligen Pigmentruss, wie er im Handel erhältlich ist. Dieser wird vorteilhaft als Dispersion insbesondere in Wasser aufgetragen, wobei vorteilhaft anionenaktive Netzmittel verwendet werden. Eine derartige wässerige Dispersion enthält vorteilhaft etwa 25 Gew.-% Russ und 2 Gew.-% Netzmittel.

Als Binder kann man einen für diese Zwecke handelsüblichen Binder verwenden, insbesondere ein thermisch vernetzbares EVA-Copolymer. Auch den Binder verwendet man vorteilhaft als Dispersion, insbesondere in Wasser, bei einem Feststoffgehalt von etwa 40-60 Gew.-%. Eine solche Dispersion weist damit einen Feststoffgehalt auf, der aus etwa 70-90 Gew.-% Binder und etwa 10-30 Gew.-% Russ besteht, zusätzlich vorteilhaft etwa 2 Gew.-% Netzmittel.

Der Gewebeträger ist vorteilhaft ein Gewebe in Leinwandbindung, insbesondere ein Zellwollgewebe. Sowohl für die Kette als auch für den Schuss beträgt die Fadenzahl jeweils etwa 25-30, bei einer Fadenstärke von vorteilhaft 15-25 tex, wie sich dies als vorteilhaft für das erfindungsgemässe Klebeband herausgestellt hat.

Als thixotrope Farbe eignen sich insbesondere solche, die im Flexo-Druckverfahren verarbeitet werden können. Diese Farbe sammelt sich aufgrund der Gewebestruktur in den «Tälern», ohne aber die Oberfläche des russhaltigen Binders vollständig zu bedecken. Der Farbton ist beliebig, besonders bevorzugt ist jedoch oliv aufgrund der besonderen Bedürfnisse des Militärs, insbesondere der deutschen Bundeswehr.

Als Kleber können an sich bekannte druckempfindliche Selbstkleber oder auch heisssiegelbare Kleber verwendet werden. Diese sind im Stand der Technik gut bekannt und handelsüblich. Insbesondere eignen sich als druckempfindliche Selbstkleber solche auf Acrylat- oder Kautschukbasis. Vorteilhaft wird der Kleber in an sich bekannter Weise abgedeckt, insbesondere mittels eines Trenn-Papiers oder einer Folie.

Vorteilhaft ist der Gewebeträger vorbeschichtet, um das Gewebe zu schliessen und ein Durchschlagen der aufzubringenden Masse zu verhindern. Dafür eignen sich an sich bekannte Massen, insbesondere solche vom Typ einer Acrylat-Dispersion.

Schliesslich kann auf der Oberfläche des erfindungsgemässen Klebebandes ein Markierungsaufdruck angebracht sein, je nach den spezifischen Erfordernissen. Unter Markierungsaufdruck wird dabei jedoch kein vollflächiges Bedrucken verstanden, um die antistatischen Eigenschaften des Klebebandes nicht zu beeinträchtigen.

Anhand eines Ausführungsbeispiels wird im folgenden die Erfindung erläutert.

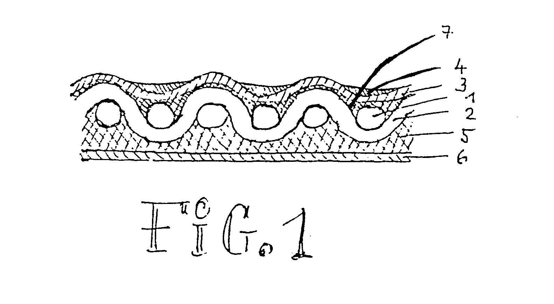

Figur 1 zeigt den Querschnitt durch ein erfindungsgemässes Klebeband in schematischer Form. Ein Gewebe aus Kette 1 und Schuss 2 ist beschichtet mit einem Binder 7. Darauf folgt die russhaltige Schicht 3, die die Struktur des Gewebes ebenfalls annimmt. In den auf der Oberfläche verbleibenden Mulden befindet sich eine thixotrope Farbe 4, bei dazwischen herausragenden Hügeln des russhaltigen Schicht 3. Auf der Unterseite der Gewebes befindet sich die Schicht eines Klebers 5, die ihrerseits abgedeckt ist durch ein Abdeckpapier 6.

Die Zusammensetzung und der Aufbau wird im folgenden näher erläutert.

*Beispiel 1:*

Gewebeträger: Zellwollgewebe in Leinwandbindung

|  | Kette | Schuss |
|---|---|---|
| Fadenstellung | 30 tex/28 tex | |
| Garnstärke | 20 tex/20 tex | |

beschichtet mit 75 g/m² einer Acrylatmasse, bestehend aus

| | |
|---|---|
| Acronal ® 500 D | 103,4 Gew.-Teile |
| Füllstoffe | 48,3 Gew.-Teile |
| Ammoniak | 1,7 Gew.-Teile |

zum Schliessen des Gewebes.

Russhaltiger Binder, bestehend aus

| | |
|---|---|
| Vinnapas ® LT 420 | 65 Gew.-Teile |
| Vinnapas ® EN 428 | 35 Gew.-Teile |
| Derussol ® VU 25L | 30 Gew.-Teile |

Mit einer Auftragsstärke von ca. 18 g/m², ergebend einen Oberflächenwiderstand von $3.10^4$ ohm/cm.

Die Klebmasse ist eine thermisch vernetzbare Kautschukmasse mit einer Auftragsstärke von 120 g/m², die mit einem weissen Trennpapier abgedeckt ist.

Die Bedruckung erfolgt mit PVC-Druckfarbe

| | |
|---|---|
| schwarz | 150 Gew.-Teile |
| gelb | 1500 Gew.-Teile |

im Flexodruck.

Ein Markierungsaufdruck wird im Flachsiebdruck aufgebracht, je nach Erfordernissen.

## Patentansprüche

1. Farbiges, antistatisches Klebeband, gekennzeichnet durch
a) einen Gewebeträger
b) der beschichtet ist mit Russ in einem Binder,
c) wobei die Beschichtung die Struktur des Gewebeträgers annimmt,
d) und bedruckt mit einer nicht-leitenden thixotropen Farbe,
e) wobei sich die Farbe in den Vertiefungen gemäss des Gewebeträgers befindet, sowie
f) einen Kleber auf der Rückseite.

2. Klebeband nach Anspruch 1, dadurch gekennzeichnet, dass die Russkonzentration im Binder etwa 10-30 Gew.-% beträgt.

3. Klebeband nach einem der Ansprüche 1 oder 2, dadurch gekennzeichnet, dass der Russ ein feinteiliger Pigmentruss ist, der als Dispersion, insbesondere in Wasser, enthaltend anionen-aktive Netzmittel, verwendet wird.

4. Klebeband nach einem der Ansprüche 1-3, dadurch gekennzeichnet, dass der Binder ein thermisch vernetzbares EVA-Copolymer ist.

5. Klebeband nach einem der Ansprüche 1-4, dadurch gekennzeichnet, dass der Binder als Dispersion, insbesondere in Wasser, verwendet wird, bei einem Feststoffgehalt von etwa 40-60 Gew.-%.

6. Klebeband nach einem der Ansprüche 1-5, dadurch gekennzeichnet, dass der Gewebeträger ein Zellwollgewebe in Leinwandbindung ist.

7. Klebeband nach einem der Ansprüche 1-6, dadurch gekennzeichnet, dass die Farbe eine Flexo-Druckfarbe ist, insbesondere oliv.

8. Klebeband nach einem der Ansprüche 1-7, dadurch gekennzeichnet, dass der Kleber ein druckempfindlicher Selbstkleber, insbesondere auf Acrylat- oder Kautschuk-Basis, oder ein heisssiegelbarer Kleber ist, insbesondere abgedeckt mit einem Papier oder einer Folie.

9. Klebeband nach einem der Ansprüche 1-8, dadurch gekennzeichnet, dass der Gewebeträger zum Schliessen des Gewebes vorbeschichtet ist, insbesondere mit einer Acrylat-Dispersion.

10. Klebeband nach einem der Ansprüche 1-9, dadurch gekennzeichnet, dass auf der Oberfläche des Klebebandes ein Markierungsaufdruck angebracht ist.

## Claims

1. Coloured antistatic adhesive tape, characterized by
a) a fabric support
b) which is coated with carbon black in a binder,
c) the coating taking on the texture of the fabric support,
d) and printed with a nonconductive thixotropic colour,
e) the colour being present in the recesses in accordance with the fabric support, and
f) an adhesive on the reverse side.

2. Adhesive tape according to Claim 1, characterized in that the carbon black concentration in the binder is about 10-30% by weight.

3. Adhesive tape according to either of Claims 1 or 2, characterized in that the carbon black is a finely divided pigmentary carbon black which is used as a dispersion, in particular in water containing anionic wetting agents.

4. Adhesive tape according to any one of Claims 1-3, characterized in that the binder is a thermocrosslinkable EVA copolymer.

5. Adhesive tape according to any one of Claims 1-4, characterized in that the binder is used as a dispersion, in particular in water, having a solids content of about 40-60% by weight.

6. Adhesive tape according to any one of Claims 1-5, characterized in that the fabric support is a viscose rayon staple fabric in a plain weave.

7. Adhesive tape according to any one of Claims 1-6, characterized in that the colour is a flexographic printing ink, in particular olive.

8. Adhesive tape according to any one of Claism 1-7, characterized in that the adhesive is a pressure-sensitive adhesive, in particular on an acrylate or rubber basis, or a hot-sealable adhesive, in particular covered with a piece of paper or a film.

9. Adhesive tape according to any one of Claims 1-8, characterized in that the fabric support is precoated, in particular with an acrylate dispersion, for sealing the fabric.

10. Adhesive tape according to any one of Claims 1-9, characterized in that the surface of the adhesive tape is furnished with a marking imprint.

**Revendications**

1. Ruban adhésif antistatique coloré, caractérisé par
a) un tissu de support,
b) qui est revêtu de noir de carbone dans un liant,
c) sur lequel le revêtement prend la structure du tissu,
d) qui est imprimé au moyen d'une encore thixotrope non conductrice,
e) sur lequel l'encre se trouve dans les creux du support en tissu, et
f) un adhésif sur l'envers.

2. Ruban adhésif suivant la revendication 1, caractérisé en ce que la concentration en noir de carbone dans le liant est d'environ 10-30% en poids.

3. Ruban adhésif suivant l'une quelconque des revendications 1 et 2, caractérisé en ce que le noir de carbone est un noir de carbone pigmentaire finement divisé qui est utilisé à l'état de dispersion, en particulier dans de l'eau, contenant un agent tensio-actif anionique.

4. Ruban adhésif suivant l'une quelconque des revendications 1 à 3, caractérisé en ce que le liant est un copolymère EVA thermiquement réticulable.

5. Ruban adhésif suivant l'une quelconque des revendications 1 à 4, caractérisé en ce que le liant est utilisé à l'état de dispersion, en particulier dans de l'eau, à une teneur en solides d'environ 40-60% en poids.

6. Ruban adhésif suivant l'une quelconque des revendications 1 à 5, caractérisé en ce que le support en tissu est un tissu de cellulose à armure toile.

7. Ruban adhésif suivant l'une quelconque des revendications 1 à 6, caractérisé en ce que l'encre est une encre pour impression flexographique, en particulier de nuance olive.

8. Ruban adhésif suivant l'une quelconque des revendications 1 à 7, caractérisé en ce que l'adhésif est un adhésif sensible à la pression, en particulier à base d'acrylate ou de caoutchouc ou est un adhésif activable à chaud, en particulier recouvert d'un papier ou d'une pellicule.

9. Ruban adhésif suivant l'une quelconque des revendications 1 à 8, caractérisé en ce que le support en tissu est prérevêtu en vue de l'obturation du tissu, en particulier au moyen d'une dispersion d'acrylate.

10. Ruban adhésif suivant l'une quelconque des revendications 1 à 9, caractérisé en ce qu'une impression de marquage est appliquée à la surface du ruban adhésif.

FIG. 1